# EUROPEAN PATENT APPLICATION

(11) **EP 2 764 973 A1**
(43) Date of publication of application: **13.08.2014**
(21) Application number: 14154755.4
(22) Date of filing: 11.02.2014
(51) Int. Cl.: B29C 44/58, B29C 33/00, B29C 44/44

(54) **Expanded polypropylene foam-forming mold**

(30) Priority: 12.02.2013 KR 20130015064
(71) Applicant: Dongshin Industry Inc., Buk-gu Ulsan 683-420 (KR)
(72) Inventor: Kim, Gyong Ho, 689-705 Ulsan (KR)
(74) Representative: De Clercq, Ann G. Y.

(57) **Abstract**

The present invention relates to an expanded polypropylene foam-forming mold including: a core mold (110) having a plurality of core forming portions formed thereon, a guide groove (114) formed between the neighboring core forming portions, and a gate (116) formed on the bottom surface of the guide groove and having blade portions (116a) formed at both side edges thereof; and a cavity mold (120) having a plurality of cavity forming portions to be combined with the plurality of core forming portions (122) and a filler gun insertion hole (124) formed between the neighboring cavity forming portions, wherein when the core mold is combined with the cavity mold, the outer peripheral surface of a filler gun (126) coupled to the filler gun insertion hole is inserted into the guide groove.

## Description

### CROSS-REFERENCE TO RELATED APPLICATION

This application is based on and claims priority from Korean Patent Application No. 10-2013-0015064 filed on February 12, 2013 in the Korean Intellectual Property Office, the disclosure of which is incorporated herein in its entirety by reference.

### BACKGROUND OF THE INVENTION

### Field of the Invention

The present invention relates to an expanded polypropylene foam-forming mold, and more particularly, to an expanded polypropylene (hereinafter, referred simply to as 'EPP') foam-forming mold that is capable of forming a plurality of products by means of a single gate (filler gun).

### Background of the Related Art

Generally, an EPP foam-forming mold melts EPP beads filled thereinto through the application of high pressure and steam to the EPP beads, thus forming given EPP products.

The EPP products are more eco-friendly than a material such as urethane, so that they are used for a steering wheel of a vehicle, a rim of the steering wheel, a sun visor of a vehicle, a seat, a tool case, a door pad and the like.

Under the situation where the EPP foam materials have been widely used, small products made of EPP foam have begun to be manufactured, and traditional method of adopting a gate connected to a filler gun to form a single product has been used for such small products. However, such method decreases the productivity and workability and increases the production cost.

### SUMMARY OF THE INVENTION

Accordingly, the present invention has been made in view of the above-mentioned problems occurring in the prior art, and it is an object of the present invention to provide an expanded polypropylene foam-forming mold that is capable of forming a plurality of products by means of a single gate (filler gun), thus improving the productivity and reducing the production cost.

To accomplish the above-mentioned object, according to a first aspect of the present invention, there is provided an expanded polypropylene foam-forming mold including: a core mold having a plurality of core forming portions formed thereon, a guide groove formed between the neighboring core forming portions, and a gate formed on the bottom surface of the guide groove and having blade portions formed at both side edges thereof; and a cavity mold having a plurality of cavity forming portions to be combined with the plurality of core forming portions and a filler gun insertion hole formed between the neighboring cavity forming portions, wherein when the core mold is combined with the cavity mold, the outer peripheral surface of a filler gun coupled to the filler gun insertion hole is inserted into the guide groove.

To accomplish the above-mentioned object, according to a second aspect of the present invention, there is provided an expanded polypropylene foam-forming mold including: a core mold having a plurality of core forming portions formed thereon, a guide groove formed between the neighboring core forming portions and having a seating groove formed on the bottom surface thereof, and an operating gate seated into the seating groove of the guide groove in such a manner as to move in a height direction of the core mold; and a cavity mold having a plurality of cavity forming portions to be combined with the plurality of core forming portions and a filler gun insertion hole formed between the neighboring cavity forming portions, wherein when the core mold is combined with the cavity mold, the outer peripheral surface of a filler gun coupled to the filler gun insertion hole is inserted into the guide groove.

According to the present invention, desirably, the filler gun insertion hole has a first diameter portion, a second diameter portion, and a stepped projection formed on the boundary surface between the first diameter portion and the second diameter portion so as to seat a body of the filler gun thereon.

According to the present invention, desirably, the seating groove has an elastic member mounted at the interior thereof so as to apply an elastic force to the operating gate.

According to the present invention, desirably, the seating groove has a protrusion portion formed on the bottom surface thereof so as to fix the position of the elastic member thereto.

### BRIEF DESCRIPTION OF THE DRAWINGS

The above and other objects, features and advantages of the present invention will be apparent from the following detailed description of the preferred embodiments of the invention in conjunction with the accompanying drawings, in which:
FIG. 1 is a perspective view showing an expanded polypropylene foam-forming mold according to a first embodiment of the present invention;
FIG.2 is a schematic sectional view showing the expanded polypropylene foam-forming mold according to the first embodiment of the present invention; and
FIG.3 is a schematic sectional view showing an expanded polypropylene foam-forming mold according to a second embodiment of the present invention.

### DETAILED DESCRIPTION OF THE PREFERRED EMBODIMENT

Hereinafter, an explanation on an expanded polypropylene foam-forming mold according to preferred embodiments of the present invention will be in detail given with reference to the attached drawing. In the description, the thicknesses of the lines or the sizes of the components shown in the drawing may be magnified for the clarity and convenience of the description.

Further, the terms as will be discussed later are defined in accordance with the functions of the present invention, but may be varied under the intention or regulation of a user or operator. Therefore, they should be defined on the basis of the whole scope of the present invention.

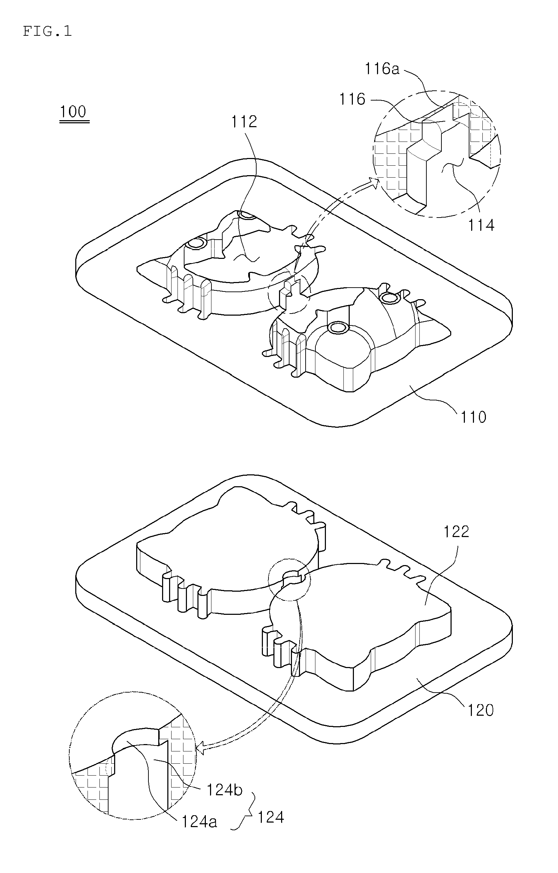

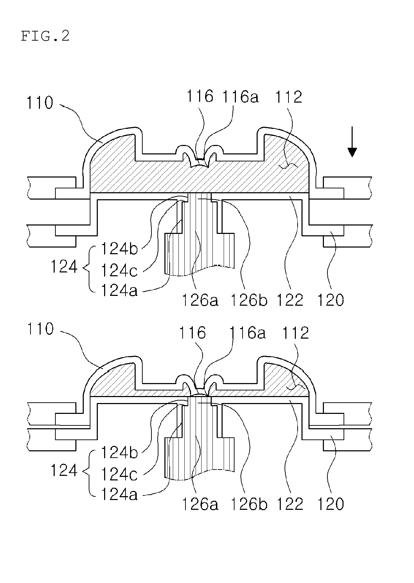

FIG. 1 is a perspective view showing an expanded polypropylene foam-forming mold according to a first embodiment of the present invention; and FIG.2 is a schematic sectional view showing the expanded polypropylene foam-forming mold according to the first embodiment of the present invention.

Referring to FIGS.1 and 2, an EPP foam-forming mold 100 according to a first embodiment of the present invention includes: a core mold 110 having a plurality of core forming portions 112 formed thereon, a guide groove 114 formed between the neighboring core forming portions 112, and a gate 116 formed on the bottom surface of the guide groove 14 and having blade portions 116a formed at both side edges thereof; and a cavity mold 120 having a plurality of cavity forming portions 122 to be combined with the plurality of core forming portions 112 and a filler gun insertion hole 124 formed between the neighboring cavity forming portions 122, wherein when the core mold 110 is combined with the cavity mold 120, the outer peripheral surface of a filler gun 126 coupled to the filler gun insertion hole 124 is inserted into the guide groove 114.

Accordingly, the EPP foam-forming mold 100 melts the EPP beads filled into the forming spaces formed by the combination of the core forming portions 112 and the cavity forming portions 122, through the application of high pressure and steam, thus forming given EPP foams.

In this case, the filler gun insertion hole 124 formed between the neighboring cavity forming portions 122 has a first diameter portion 124a, a second diameter portion 124b, and a stepped projection 124c formed on the boundary surface between the first diameter portion 124a and the second diameter portion 124b.

When the filler gun 126 is coupled to the filler gun insertion hole 124, the stepped projection 124c serves to support a body 126a of the filler gun 126 so as to accurately locate a nozzle portion 126b of the filler gun 126 to the second diameter portion 124b.

When the core mold 110 is combined with the cavity mold 120, the guide groove 114 serves to guide the blade portions 116a formed on the gate 116 in such a manner as to be accurately brought into contact with the nozzle portion 126b of the filler gun 126.

The gate 116 is formed concaved on the bottom surface of the guide groove 116 and serves to fill the EPP beads into the forming spaces formed by the combination of the core forming portions 112 and the cavity forming portions 122.

Further, the blade portions 116a formed on both side edges of the gate 116 serve to easily separate the formed products in the forming spaces formed by the combination of the core forming portions 112 and the cavity forming portions 122 from each other.

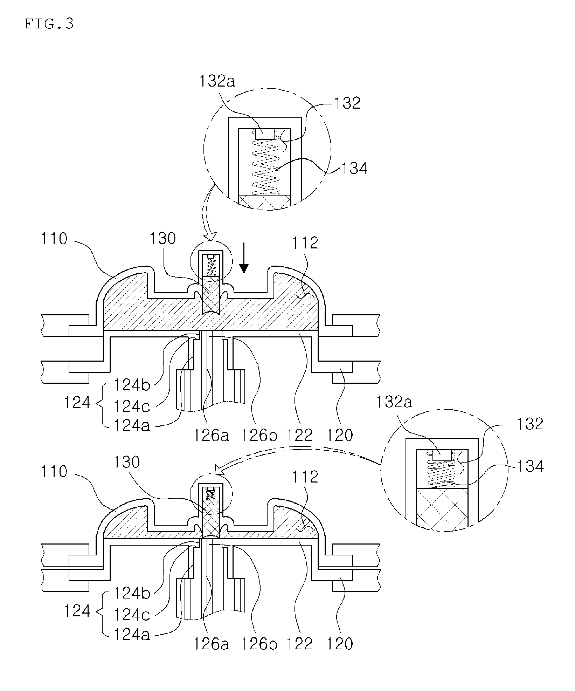

FIG.3 is a schematic sectional view showing an expanded polypropylene foam-forming mold according to a second embodiment of the present invention.

Referring to FIG.3, an EPP foam-forming mold 100 according to a second embodiment of the present invention has the almost same configuration as that in the first embodiment of the present invention, except that a seating groove 132 is formed on the bottom surface of the guide groove 114 and an operating gate 130 is seated into the seating groove 132 in such a manner as to move in a height direction of the core mold 110.

Therefore, the repeated explanation will be avoided for the brevity of the description.

In this case, desirably, an elastic member 134 is mounted inside the seating groove 132, so that the operating gate 130 elastically moves in the height direction of the core mold 110.

At this time, desirably, the seating groove 132 further has a protrusion portion 132a formed on the bottom surface thereof so as to fix the position of the elastic member 134 thereto.

Further, the operating gate 130 is mounted into the seating groove 132 in such a manner as to be protruded from the seating groove 132 on an end thereof, so that when the EPP beads are filled into the forming spaces formed by the combination of the core forming portions 112 and the cavity forming portions 122, they can be filled to desired density.

Hereinafter, an explanation on the operation of the EPP foam-forming mold according to the preferred embodiments of the present invention will be given.

First, if the core mold 110 moves toward the cavity mold 120, the outer peripheral surface of the filler gun 126 is inserted into the guide groove 114 formed between the neighboring core forming portions 112.

After that, in the state where the blade portions 116a formed on both side edges of the gate 116 are brought into contact with the nozzle portion 126b of the filler gun 126, the EPP beads are filled into the forming spaces formed by the combination of the core forming portions 112 and the cavity forming portions 122, and next, if steam is supplied to the forming spaces and a give pressure is applied to them, the EPP beads filled into the forming spaces are melted and formed.

As mentioned above, the EPP foam-forming mold according to the preferred embodiments of the present invention is capable of forming the plurality of products through the gate and the filler gun, thus improving the productivity and reducing the production cost.

While the present invention has been described with reference to the particular illustrative embodiments, it is not to be restricted by the embodiments but only by the appended claims. It is to be appreciated that those skilled in the art can change or modify the embodiments without departing from the scope and spirit of the present invention.

## Claims

1. An expanded polypropylene foam-forming mold comprising:
a core mold having a plurality of core forming portions formed thereon, a guide groove formed between the neighboring core forming portions, and a gate formed on the bottom surface of the guide groove and having blade portions formed at both side edges thereof; and
a cavity mold having a plurality of cavity forming portions to be combined with the plurality of core forming portions and a filler gun insertion hole formed between the neighboring cavity forming portions,
wherein when the core mold is combined with the cavity mold, the outer peripheral surface of a filler gun coupled to the filler gun insertion hole is inserted into the guide groove.

2. An expanded polypropylene foam-forming mold comprising:
a core mold having a plurality of core forming portions formed thereon, a guide groove formed between the neighboring core forming portions and having a seating groove formed on the bottom surface thereof, and an operating gate seated into the seating groove of the guide groove in such a manner as to move in a height direction of the core mold; and
a cavity mold having a plurality of cavity forming portions to be combined with the plurality of core forming portions and a filler gun insertion hole formed between the neighboring cavity forming portions,
wherein when the core mold is combined with the cavity mold, the outer peripheral surface of a filler gun coupled to the filler gun insertion hole is inserted into the guide groove.

3. The expanded polypropylene foam-forming mold according to claim 1 or 2, wherein the filler gun insertion hole has a first diameter portion, a second diameter portion, and a stepped projection formed on the boundary surface between the first diameter portion and the second diameter portion so as to seat a body of the filler gun thereon.

4. The expanded polypropylene foam-forming mold according to claim 2, wherein the seating groove has an elastic member mounted at the interior thereof so as to apply an elastic force to the operating gate.

5. The expanded polypropylene foam-forming mold according to claim 4, wherein the seating groove has a protrusion portion formed on the bottom surface thereof so as to fix the position of the elastic member thereto.
